(19) Europäisches Patentamt

European Patent Office

Office européen des brevets

(11) **EP 1 016 876 A1**

(12) **EUROPÄISCHE PATENTANMELDUNG**

(43) Veröffentlichungstag:
05.07.2000 Patentblatt 2000/27

(51) Int. Cl.⁷: **G01S 13/60**

(21) Anmeldenummer: **99119706.2**

(22) Anmeldetag: **05.10.1999**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **29.12.1998 DE 19860633**

(71) Anmelder:
**Valeo Schalter und Sensoren GmbH
74321 Bietigheim-Bissingen (DE)**

(72) Erfinder: **Reiche, Martin
53639 Königswinter (DE)**

(74) Vertreter:
**Dreiss, Fuhlendorf, Steimle & Becker
Gerokstrasse 6
70188 Stuttgart (DE)**

(54) **Verfahren zum Messen der Geschwindigkeit eines Fahrzeugs**

(57)    Die Erfindung betrifft ein Verfahren und eine Vorrichtung (5) zum Messen der Geschwindigkeit ($v$) eines Fahrzeugs (1) relativ zu einer Fahrbahnoberfläche (2). Um die Genauigkeit der Geschwindigkeitsmessung zu erhöhen und um die Geschwindigkeit ($v$) des Fahrzeugs (1) unabhängig von dem Durchmesser und der Haftung eines Fahrzeugrades (4) auf der Fahrbahnoberfläche (2) bestimmen zu können, schlägt die Erfindung vor, dass die Geschwindigkeit ($v$) des Fahrzeugs (1) unmittelbar auf der Fahrbahnoberfläche (2) unter Ausnutzung des Dopplereffekts gemessen wird.

Fig.1

EP 1 016 876 A1

**Beschreibung**

Die vorliegende Erfindung betrifft ein Verfahren zum Messen der Geschwindigkeit eines Fahrzeugs relativ zu einer Fahrbahnoberfläche.

Die Erfindung betrifft außerdem eine Vorrichtung zum Messen der Geschwindigkeit eines Fahrzeugs relativ zu einer Fahrbahnoberfläche.

Derartige Vorrichtungen zum Messen der Geschwindigkeit eines Fahrzeugs sind in unterschiedlichen Ausführungsformen aus dem Stand der Technik bekannt. Die bekannten Vorrichtungen setzen üblicherweise ein Verfahren ein, bei dem die Geschwindigkeitsmessung durch Betrachtung der Umdrehungsfrequenz eines oder mehrerer Fahrzeugräder erfolgt. Über den durchschnittlichen Umfang der Räder wird dann auf die pro Zeiteinheit zurückgelegte Strecke geschlossen. Die Erfassung der Umdrehungsfrequenz erfolgt bspw. analog durch einen Tachometergenerator oder digital durch einen inkrementalen induktiven Geber.

Unabhängig von der Art der Messung der Umdrehungsfrequenz weisen die aus dem Stand der Technik bekannten Meßverfahren zwei wesentliche Nachteile auf. Zum einen variiert der Durchmesser der Fahrzeugräder und damit der Umfang über die Temperatur der Räder. Da bei dem bekannten Geschwindigkeitsmeßverfahren von einem konstanten Radumfang ausgegangen wird, führt eine Änderung des Radumfangs zu einem falschen Meßergebnis. Zum anderen erfolgt das Abrollen der Räder relativ zu der Fahrbahnoberfläche, insbesondere bei Beschleunigungs- und Bremsvorgängen, mit einem Schlupf, der das Meßergebnis des bekannten Geschwindigkeitsmessverfahrens ebenfalls verfälscht.

Aus den vorgenannten Nachteilen des Standes der Technik ergibt sich eine Aufgabe der vorliegenden Erfindung, ein Verfahren zum Messen der Geschwindigkeit eines Fahrzeugs der eingangs genannten Art dahingehend auszugestalten und weiterzubilden, daß die Genauigkeit der Geschwindigkeitsmessung erhöht und das Ergebnis der Geschwindigkeitsmessung unabhängig ist von dem Durchmesser der Fahrzeugräder und von der Haftung der Fahrzeugräder auf der Fahrbahnoberfläche.

Zur Lösung dieser Aufgabe schlägt die Erfindung ausgehend von dem Verfahren der eingangs genannten Art vor, daß die Geschwindigkeit des Fahrzeugs unmittelbar an der Fahrbahnoberfläche unter Ausnutzung des Dopplereffekts gemessen wird.

Der Dopplereffekt setzt eine Sendeeinheit zum Aussenden von Strahlen mit einer bestimmten Frequenz und eine Empfangseinheit zum Empfangen dieser Strahlen voraus. Die Strahlen können als optische, akustische oder als elektromagnetische Wellen ausgebildet sein. Wenn zwischen der Sendeeinheit und dem Empfangseinheit eine Relativbewegung besteht, sich also ihr gegenseitiger Abstand vergrößert oder verkleinert, nimmt die Empfangseinheit eine andere Frequenz wahr, als die Sendeeinheit ausgesandt hat. Die Differenz der Sendefrequenz und der Empfangsfrequenz ändert sich durch den Dopplereffekt in proportionaler Abhängigkeit von der Geschwindigkeit der Relativbewegung zwischen der Sendeeinheit und der Empfangseinheit. Aus der Differenz der Sendefrequenz und der Empfangsfrequenz kann die Geschwindigkeit der Relativbewegung ermittelt werden.

Zum Messen der Geschwindigkeit eines Fahrzeugs sind die Sendeeinheit und die Empfangseinheit an dem Fahrzeug angeordnet. Die Sendeeinheit sendet Strahlen in Richtung auf die Fahrbahnoberfläche aus. Die Strahlen werden von der Fahrbahnoberfläche zumindest teilweise reflektiert und die reflektierten Strahlen von der Empfangseinheit empfangen. Die Fahrbahnoberfläche dient dabei als imaginäre Sendeeinheit, da es für die Empfangseinheit so aussieht, als sendete die Fahrbahnoberfläche die reflektierten Strahlen aus. Aus der Differenz der Sendefrequenz und der Empfangsfrequenz kann somit die Geschwindigkeit des Fahrzeugs relativ zu der Fahrbahnoberfläche ermittelt werden.

Das erfindungsgemäße Verfahren mißt die Geschwindigkeit des Fahrzeugs unmittelbar an der Fahrbahnoberfläche. Dadurch kann die Genauigkeit der Geschwindigkeitsmessung deutlich erhöht werden. Außerdem ist das Ergebnis der Geschwindigkeitsmessung mit dem erfindungsgemäßen Verfahren unabhängig von dem Durchmesser und der Haftung der Fahrzeugräder.

Vorteilhafterweise wird die Geschwindigkeit des Fahrzeugs auch mittelbar bestimmt, indem die Umdrehungsfrequenz eines Rades des Fahrzeugs gemessen und die Geschwindigkeit des Fahrzeugs aus der Umdrehungsfrequenz und dem Umfang des Rades mittelbar bestimmt wird.

Gemäß einer vorteilhaften Weiterbildung der Erfindung wird vorgeschlagen, daß die unmittelbar an der Fahrbahnoberfläche gemessene Geschwindigkeit an einen Zentralrechner des Fahrzeugs weitergeleitet wird. Dort kann die unmittelbar gemessene Fahrzeuggeschwindigkeit weiterverarbeitet werden. Die Weiterverarbeitung umfaßt bspw. die Anzeige der Geschwindigkeit in einer entsprechenden Anzeigeeinheit auf dem Armaturenbrett oder die Berücksichtigung der Geschwindigkeit in Steuerungen oder Regelungen von Fahrzeugzuständen, bspw. der Fahrzeuggeschwindigkeit oder der Fahrzeugstabilität.

Vorteilhafterweise wird die unmittelbar gemessene Geschwindigkeit des Fahrzeugs im Rahmen der Weiterverarbeitung mit der mittelbar gemessenen Geschwindigkeit des Fahrzeugs verglichen. Vorzugsweise wird aus dem Vergleich der unmittelbar gemessenen Geschwindigkeit des Fahrzeugs mit der mittelbar gemessenen Geschwindigkeit des Fahrzeugs der Schlupf eines Rades des Fahrzeugs ermittelt. Da die mittelbar gemessene Geschwindigkeit abhängig ist von der Umdrehungsfrequenz der Fahrzeugräder, kann aus dem Vergleich der unmittelbar mit der mittelbar gemessenen Fahrzeuggeschwindigkeit im Falle von Beschleunigung oder Abbremsen des Fahrzeugs der Schlupf eines Fahrzeugrades ermittelt werden. Die Information über den Schlupf gestattet wiederum Rückschlüsse auf die Haftung des Rades bzw. auf den momentanen Haftkoeffizienten, der stark von der Beschaffenheit der Fahrbahnoberfläche und den Witterungsverhältnissen abhängig ist. Die Information über den Haftkoeffizienten kann bspw. in einer Traktionssteuerung des Fahrzeugs zur Begrenzung des Motordrehmoments oder der Fahrzeuggeschwindigkeit einbezogen werden.

Wenn das Fahrzeug nicht beschleunigt oder abgebremst wird und das Fahrzeug auf einer geraden Fahrbahn fährt, ist der Schlupf an den Rädern in der Regel vernachlässigbar klein. Unter diesen Bedingungen kann aus dem Vergleich der unmittelbar gemessenen Fahrzeuggeschwindigkeit mit der mittelbar gemessenen Fahrzeuggeschwindigkeit auf den tatsächlichen Durchmesser eines Fahrzeugrades geschlossen werden. Damit kann bspw. eine Diagnose des Reifendrucks und eine Warnung bei zu niedrigem oder überhöhtem Reifendruck verbunden werden. Deshalb wird gemäß einer bevorzugten Ausführungsform der Erfindung vorgeschlagen, daß aus dem Vergleich der unmittelbar gemessenen Geschwindigkeit des Fahrzeugs mit der mittelbar gemessenen Geschwindigkeit des Fahrzeugs der Umfang eines Rades des Fahrzeugs und dadurch der Luftdruck des Rades ermittelt wird.

Gemäß einer bevorzugten Weiterbildung der vorliegenden Erfindung wird die Geschwindigkeit des Fahrzeugs mittels eines Dopplerradars unmittelbar gemessen. Ein Dopplerradar sendet ein Signal aus, das als elektromagnetische Wellen ausgebildet ist. Bei dem Signal handelt es sich vorzugsweise um ein kontinuierliches unmoduliertes Signal.

Gemäß einer bevorzugten Ausführungsform der Erfindung wird vorgeschlagen, daß durch das Dopplerradar elektromagnetische Wellen auf die Fahrbahnoberfläche ausgesendet, die ausgesandten elektromagnetischen Wellen von der Fahrbahnoberfläche reflektiert, die reflektierten elektromagnetischen Wellen von dem Dopplerradar empfangen werden und aus der Differenz der Sendefrequenz und der Empfangsfrequenz die Geschwindigkeit des Fahrzeugs bestimmt wird.

Vorteilhafterweise werden die elektromagnetischen Wellen in einem Neigungswinkel ($\alpha$) auf die Fahrbahnoberfläche ausgesendet, wobei die Geschwindigkeit ($v$) des Fahrzeugs aus der Gleichung

$v = k \cdot (1 - f_E / f_S) \cdot \cos \alpha$, mit einer Konstanten $k$,
der Sendefrequenz $f_S$ und
der Empfangsfrequenz $f_E$,

bestimmt wird. Die Konstante ($k$) besteht üblicherweise aus der Schallgeschwindigkeit ($c$). Es ist daran gedacht, ein Dopplerradar mittig an dem in Fahrtrichtung vorderen Bereich des Fahrzeugs anzubringen. Die Hauptstrahlrichtung der Antenne des Dopplerradars zeigt dabei in dem Neigungswinkel ($\alpha$) relativ zu der Horizontalen auf die Fahrbahnoberfläche. Da die Berechnung der Fahrzeuggeschwindigkeit unter anderem von dem Neigungswinkel ($\alpha$) abhängt, wäre zur Eliminierung dieser Abhängigkeit ein Neigungswinkel von 0° mathematisch betrachtet ideal. Allerdings verliefe der Strahl bei einem Neigungswinkel von 0° in etwa parallel zu der Fahrbahnoberfläche und eine Reflexion der elektromagnetischen Wellen würde nicht erfolgen. Somit muß bei der Wahl des Neigungswinkels ($\alpha$) ein Kompromiß zwischen der Genauigkeit des Meßverfahrens einerseits und der Intensität der Reflexion andererseits getroffen werden.

Im Gegensatz zu Licht lassen sich elektromagnetische Wellen nur mit erheblichem Aufwand stark bündeln. Mit dem Grad der Bündelung vergrößern sich die Abmessungen und Kosten der Antenne des Dopplerradars und damit auch des Dopplerradars selbst. Für das erfindungsgemäße Verfahren werden die elektromagnetischen Wellen bspw. mittels einer sog. Patchantenne, gebündelt (z. B. 3dB Grenzen bei ±7°, 10 Patches).

Ein weniger stark gebündelter Strahl trifft nicht quasipunktförmig auf die Fahrbahnoberfläche, sondern leuchtet einen Flächenausschnitt der Fahrbahnoberfläche aus. Das Ausleuchten eines Flächenausschnitts hat den Vorteil, daß die Wahrscheinlichkeit der Detektion eines reflektierenden Punktes auf der Fahrbahnoberfläche größer wird. Das erlaubt eine Verringerung des Neigungswinkels des Dopplerradars, wodurch der Einfluß des Neigungswinkels ($\alpha$) auf die Berechnung der Geschwindigkeit sinkt und die Genauigkeit des Meßverfahrens erhöht werden kann.

Verschiedene Stellen auf dem ausgeleuchteten Flächenausschnitt haben einen unterschiedlichen Abstand zu dem Dopplerrader. Abhängig von dem minimalen und dem maximalen Abstand des ausgeleuchteten Flächenausschnitts gibt es einen maximalen und einen minimalen Neigungswinkel ($\alpha_{max}$ und $\alpha_{min}$). Die empfangenen elektromagnetischen Wellen weisen somit keine eindeutige Empfangsfrequenz, sondern ein Frequenzspektrum auf, dessen minimale und maximale Frequenz von dem minimalen und maximalen Neigungswinkel ($\alpha_{min}$ und $\alpha_{max}$) abhängt. Das Spektrum unterschiedlicher Frequenzen der von dem Dopplerradar empfangenen elektromagnetischen Wellen wird gemäß einer bevorzugten Ausführungsform der Erfindung vor dem Messen der Geschwindigkeit des Fahrzeugs gemittelt, gefiltert und/oder gewichtet. Dadurch kann das Spektrum der Empfangsfrequenzen auf eine Frequenz verdichtet werden, die einem bestimmten mittleren Neigungswinkel ($\alpha$) entspricht.

Gemäß einer vorteilhaften Weiterbildung der Erfindung wird vorgeschlagen, daß durch das Dopplerradar pulsförmig modulierte elektromagnetische Wellen auf die Fahrbahnoberfläche ausgesendet werden, die ausgesandten pulsförmig modulierten elektromagnetischen Wellen von der Fahrbahnoberfläche reflektiert werden, die reflektierten pulsförmig modulierten elektromagnetischen Wellen von dem Dopplerradar empfangen werden, aus der Differenz der Sendefrequenz und der Empfangsfrequenz die Geschwindigkeit des Fahrzeugs und aus der zeitlichen Verzögerung der Sendepulse zu den Empfangspulsen die Laufzeit der pulsförmig modulierten elektromagnetischen Wellen ermittelt wird. Das erfindungsgemäße Verfahren wird also auf ein Pulsdopplerverfahren erweitert. Zur Erzeugung der pulsförmigen Wellen wird das Sendeträgersignal pulsförmig in der Amplitude moduliert. Die Fahrzeuggeschwindigkeit wird aus einem Vergleich der Sendeträgerfrequenz mit der Empfangsträgerfrequenz bestimmt. Aus dem Spektrum unterschiedlicher Empfangsfrequenzen können bspw. diejenigen Empfangsfrequenzen herausgefiltert werden, die von empfangenen elektromagnetischen Wellen resultieren, die eine bestimmte Laufzeit aufweisen und somit einen bestimmten Weg von der Fahrbahnoberfläche bis zu der Empfangseinheit des Dopplerradars zurückgelegt haben. Durch die Laufzeitbegrenzung der empfangenen elektromagnetischen Wellen kann die Anzahl der zu verwertenden Wellen auf einen bestimmten Meßbereich beschränkt werden. Alle anderen Empfangsfrequenzen werden bei der unmittelbaren Bestimmung der Fahrzeuggeschwindigkeit nicht berücksichtigt.

Vorzugsweise wird aus der Laufzeit der pulsförmig modulierten elektromagnetischen Wellen der Abstand zwischen dem Dopplerrader und der Fahrbahnoberfläche ermittelt. Durch eine Einschränkung des Gültigkeitsbereichs der Laufzeit kann der zulässige Bereich des Neigungswinkels ($\alpha$) eingeschränkt werden.

Eine einfache Realisierung dieser Filterfunktion bietet bspw. ein Laufzeittor. Mit Hilfe eines Laufzeittors werden gemäß einer bevorzugten Ausführungsform der Erfindung lediglich die empfangenen pulsförmig modulierten elektromagnetischen Wellen, deren Laufzeit innerhalb eines vorgegebenen Laufzeitbereichs liegt, zum Bestimmen der Geschwindigkeit des Fahrzeugs herangezogen. Durch die zusätzliche Laufzeitmessung kann gewissermaßen eine Bündelung der empfangenen Strahlen vorgenommen werden. Die Laufzeitmessung stellt somit eine sinnvolle Alternative oder Ergänzung zu einer stark bündelnden Antenne des Dopplerradars dar.

Gemäß einer vorteilhaften Weiterbildung der Erfindung wird vorgeschlagen, daß durch das Dopplerradar der Abstand des Fahrzeugs zu Objekten auf der Fahrbahn ermittelt werden kann. Vorzugsweise wird der Abstand des Fahrzeugs zu anderen Fahrzeugen, Fahrbahnbegrenzungen o. ä. ermittelt, um das rangieren des Fahrzeugs, insbesondere beim Einparken des Fahrzeugs, zu erleichtern. Diese zusätzliche Funktion des Dopplerradars als Einparkhilfe kann durch minimalen zusätzlichen Kostenaufwand realisiert werden. Umgekehrt wäre es auch denkbar, daß in Fahrzeugen bereits vorhandene Radar-Einparkhilfen zur Geschwindigkeitsmessung eingesetzt werden. Dies wäre ein entscheidender Vorteil derartiger Radar-Einparkhilfen gegenüber andersartigen Einparkhilfen, wie bspw. Ultraschall-Einparkhilfen, und könnte die Akzeptanz der Radar-Einparkhilfen bei Fahrzeugkäufern trotz der höheren Anschaffungskosten erhöhen.

Eine weitere Aufgabe der vorliegenden Erfindung besteht darin, eine Vorrichtung zum Messen der Geschwindigkeit eines Fahrzeugs der eingangs genannten Art dahingehend auszugestalten und weiterzubilden, daß die Genauigkeit der Geschwindigkeitsmessung erhöht und das Ergebnis der Geschwindigkeitsmessung unabhängig ist von dem Durchmesser und der Haftung der Fahrzeugräder auf der Fahrbahnoberfläche.

Zur Lösung dieser Aufgabe schlägt die Erfindung ausgehend von der Vorrichtung der eingangs genannten Art vor, daß die Vorrichtung erste Mittel zum Messen der Geschwindigkeit des Fahrzeugs unmittelbar auf der Fahrbahnoberfläche unter Ausnutzung des Dopplereffekts aufweist.

Vorteilhafterweise weist das Fahrzeug zweite Mittel zum Messen der Umdrehungsfrequenz eines Rades des Fahrzeugs und zum mittelbaren Bestimmen der Geschwindigkeit ($v_{mittelbar}$) des Fahrzeugs aus der Umdrehungsfrequenz und dem Umfang des Rades auf.

Die ersten Mittel sind vorteilhafterweise als ein Dopplerradar ausgebildet. Das Dopplerradar weist vorzugsweise eine Sendeeinheit zum Aussenden von elektromagnetischen Wellen auf die Fahrbahnoberfläche und eine Empfangseinheit zum Empfangen der von der Fahrbahnoberfläche reflektierten elektromagnetischen Wellen auf.

Gemäß einer bevorzugten Ausführungsform ist das Dopplerradar in dem in Fahrtrichtung vorderen Bereich des Fahrzeugs angeordnet. Das Dopplerradar ist vorteilhafterweise derart ausgerichtet, daß die elektromagnetischen Wellen in Fahrtrichtung vor dem Fahrzeug in einem Winkel ($\alpha$) auf die Fahrbahnoberfläche treffen.

Gemäß einer bevorzugten Weiterbildung der Erfindung weist das Dopplerradar Mittel zum Bündeln der ausgesandten elektromagnetischen Wellen auf. Die Mittel zum Bündeln der ausgesandten elektromagnetischen Wellen sind bspw. als eine bündelnde Antenne ausgebildet. Es ist auch denkbar, daß die Mittel zum Bündeln der ausgesandten Wellen das Sendeträgersignal pulsförmig in der Amplitude modulieren und die Pulslaufzeit der empfangenen pulsförmig modulierten elektromagnetischen Wellen ermitteln. Die bei der Messung der Fahrzeuggeschwindigkeit zu berücksichtigenden elektromagnetischen Wellen können auf diejenigen Wellen beschränkt werden, deren Laufzeit innerhalb eines bestimmten Laufzeitbereichs liegt. Auch dadurch kann eine Bündelung der ausgesandten elektromagnetischen Wellen erfolgen. Alternativ oder zusätzlich weist das Dopplerradar Mittel zum Filtern, Gewichten und/oder Mitteln der Frequenzen der empfangenen elektromagnetischen Wellen auf.

Ein bevorzugtes Ausführungsbeispiel der vorliegenden Erfindung wird im Folgenden anhand der Zeichnung näher erläutert. Es zeigt:

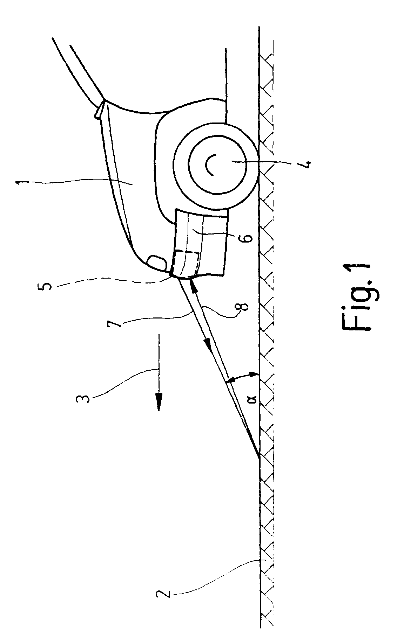

Figur 1     den vorderen Bereich eines Fahrzeugs, das eine erfindungsgemäße Vorrichtung zum Messen der Geschwindigkeit des Fahrzeugs aufweist.

In Fig. 1 ist ein Fahrzeug 1 dargestellt, das mit einer bestimmten Geschwindigkeit $v$ auf einer Fahrbahnoberfläche 2 in eine Fahrtrichtung 3 fährt. Die Umdrehungsfrequenz eines Rades 4 des Fahrzeuges 1 wird gemessen. Aus der Umdrehungsfrequenz und dem Umfang des Rades 4 kann die Geschwindigkeit $v_{mittelbar}$ des Fahrzeuges 1 mittelbar bestimmt werden.

Darüber hinaus weist das Fahrzeug 1 erste Mittel 5 auf, mit denen die Geschwindigkeit $v$ des Fahrzeugs 1 unmittelbar an der Fahrbahnoberfläche 2 unter Ausnutzung des Dopplereffekts gemessen wird. Die ersten Mittel 5 sind als ein Dopplerradar ausgebildet. Die Mittel 5 sind in dem in Fahrtrichtung 3 vorderen Bereich des Fahrzeugs 1 angeordnet. Genauer gesagt sind die ersten Mittel 5 auf der Längsachse des Fahrzeugs 1 innerhalb der Stoßstange 6 angeordnet. Die Mittel 5 weisen eine Sendeeinheit (nicht dargestellt) zum Aussenden von elektromagnetischen Wellen 7 auf die Fahrbahnoberfläche 2 und eine Empfangseinheit (nicht dargestellt) zum Empfangen der von der Fahrbahnoberfläche 2 reflektierten elektromagnetischen Wellen 8 auf. Die Stoßstange 6 des Fahrzeugs 1 weist einen für elektromagnetische Wellen durchlässigen Bereich, vorzugsweise eine Öffnung, auf, durch die die elektromagnetischen Wellen 7, 8 von der Sendeeinheit auf die Fahrbahnoberfläche 2 bzw. von der Fahrbahnoberfläche 2 zu der Empfangseinheit gelangen können.

Die Mittel 5 sind derart ausgerichtet, dass die elektromagnetischen Wellen 7 in Fahrtrichtung 3 vor dem Fahrzeug 1 in einem Winkel $\alpha$ auf die Fahrbahnoberfläche 2 treffen. Wenn sich das Fahrzeug 1 relativ zu der Fahrbahnoberfläche 2 bewegt, ändert sich die Frequenz $f_E$ der von der Empfangseinheit empfangenen elektromagnetischen Wellen 8 durch den sogenannten Dopplereffekt. Zwischen der Differenz der Sendefrequenz $f_S$ und der Empfangsfrequenz $f_E$ und der Geschwindigkeit $v$ des Fahrzeugs 1 relativ zu der Fahrbahnoberfläche 2 besteht ein proportionaler Zusammenhang. Aus der Differenz der Sendefrequenz $f_S$ und der Empfangsfrequenz $f_E$ kann somit die Geschwindigkeit $v$ des Fahrzeugs 1 relativ zu der Fahrbahnoberfläche 2 ermittelt werden.

Durch einen Vergleich der mittels der ersten Mittel 5 unmittelbar gemessenen Geschwindigkeit $v$ des Fahrzeugs 1 mit der über das Fahrzeugrad 4 mittelbar gemessenen Geschwindigkeit $v_{mittelbar}$ des Fahrzeugs 1 kann der Schlupf des Rades 4 des Fahrzeugs 1 ermittelt werden. Außerdem kann in Fahrsituationen, in denen der Schlupf an den Rädern 4 in der Regel vernachlässigbar klein ist, aus dem Vergleich der unmittelbar gemessenen Fahrzeuggeschwindigkeit $v$ mit der mittelbar gemessenen Fahrzeuggeschwindigkeit $v_{mittelbar}$ auf den tatsächlichen Durchmesser des Fahrzeugrades 4 geschlossen werden. Damit kann bspw. eine Diagnose des Reifendrucks und eine Warnung bei zu niedrigem oder überhöhtem Reifendruck verbunden werden.

**Patentansprüche**

1.  Verfahren zum Messen der Geschwindigkeit ($v$) eines Fahrzeugs (1) relativ zu einer Fahrbahnoberfläche (2), **dadurch gekennzeichnet**, daß die Geschwindigkeit ($v$) des Fahrzeugs (1) unmittelbar an der Fahrbahnoberfläche (2) unter Ausnutzung des Dopplereffekts gemessen wird.

2.  Verfahren nach Anspruch 1, dadurch gekennzeichnet, daß die Umdrehungsfrequenz eines Rades (4) des Fahrzeugs (1) gemessen und die Geschwindigkeit ($v_{mittelbar}$) des Fahrzeugs (1) aus der Umdrehungsfrequenz und dem Umfang des Rades (4) mittelbar bestimmt wird.

3.  Verfahren nach Anspruch 1 oder 2, dadurch gekennzeichnet, daß die unmittelbar an der Fahrbahnoberfläche (2) gemessene Geschwindigkeit ($v$) an einen Zentralrechner des Fahrzeugs (1) weitergeleitet wird.

4.  Verfahren nach Anspruch 2 oder 3, dadurch gekennzeichnet, daß die unmittelbar gemessene Geschwindigkeit ($v$) des Fahrzeugs (1) mit der mittelbar gemessenen Geschwindigkeit ($v_{mittelbar}$) des Fahrzeugs (1) verglichen wird.

5.  Verfahren nach Anspruch 4, dadurch gekennzeichnet, daß aus dem Vergleich der unmittelbar gemessenen Geschwindigkeit ($v$) des Fahrzeugs (1) mit der mittelbar gemessenen Geschwindigkeit ($v_{mittelbar}$) des Fahrzeugs (2) der Schlupf eines Rades (4) des Fahrzeugs (1) ermittelt wird.

6.  Verfahren nach Anspruch 4 oder 5, dadurch gekennzeichnet, daß aus dem Vergleich der unmittelbar gemessenen Geschwindigkeit ($v$) des Fahrzeugs (1) mit der mittelbar gemessenen Geschwindigkeit ($v_{mittelbar}$) des Fahrzeugs (1) der Umfang eines Rades (4) des Fahrzeugs (1) und dadurch der Luftdruck des Rades (4) ermittelt wird.

7. Verfahren nach einem der Ansprüche 1 bis 6, dadurch gekennzeichnet, daß die Geschwindigkeit (*v*) des Fahrzeugs (1) mittels eines Dopplerradars unmittelbar gemessen wird.

8. Verfahren nach Anspruch 7, dadurch gekennzeichnet, daß durch das Dopplerradar elektromagnetische Wellen (7) auf die Fahrbahnoberfläche (2) ausgesendet werden, die ausgesandten elektromagnetischen Wellen (7) von der Fahrbahnoberfläche (2) reflektiert werden, die reflektierten elektromagnetischen Wellen (8) von dem Dopplerradar empfangen werden und aus der Differenz der Sendefrequenz ($f_S$) und der Empfangsfrequenz ($f_E$) die Geschwindigkeit (*v*) des Fahrzeugs (1) bestimmt wird.

9. Verfahren nach Anspruch 8, dadurch gekennzeichnet, daß die elektromagnetischen Wellen (7) in einem Winkel ($\alpha$) auf die Fahrbahnoberfläche (2) ausgesendet werden, wobei die Geschwindigkeit (*v*) des Fahrzeugs (1) aus der Gleichung

$v = k \cdot (1\text{-}f_E/f_S) \cdot \cos\alpha$ , mit einer Konstanten *k*,
der Sendefrequenz $f_S$ und
der Empfangsfrequenz $f_E$,

bestimmt wird.

10. Verfahren nach Anspruch 8 oder 9, dadurch gekennzeichnet, daß die empfangenen elektromagnetischen Wellen (8) ein Spektrum unterschiedlicher Frequenzen ($f_E$) aufweisen, das vor dem Messen der Geschwindigkeit (*v*) des Fahrzeugs (1) gemittelt, gefiltert und/oder gewichtet wird.

11. Verfahren nach einem der Ansprüche 7 bis 10, dadurch gekennzeichnet, daß durch das Dopplerradar pulsförmig modulierte elektromagnetische Wellen auf die Fahrbahnoberfläche (2) ausgesendet werden, die ausgesandten pulsförmig modulierten elektromagnetischen Wellen von der Fahrbahnoberfläche (2) reflektiert werden, die reflektierten pulsförmig modulierten elektromagnetischen Wellen von dem Dopplerradar empfangen werden, aus der Differenz der Sendefrequenz ($f_S$) und der Empfangsfrequenz ($f_E$) die Geschwindigkeit (*v*) des Fahrzeugs (1) und aus der zeitlichen Verzögerung der Sendepulse zu den Empfangspulsen die Laufzeit der pulsförmig modulierten elektromagnetischen Wellen ermittelt wird.

12. Verfahren nach Anspruch 11, dadurch gekennzeichnet, daß aus der Laufzeit der pulsförmig modulierten elektromagnetischen Wellen der Abstand zwischen dem Dopplerrader und der Fahrbahnoberfläche (2) ermittelt wird.

13. Verfahren nach Anspruch 12, dadurch gekennzeichnet, daß lediglich die empfangenen pulsförmig modulierten elektromagnetischen Wellen, deren Laufzeit innerhalb eines vorgegebenen Laufzeitbereichs liegt, zum Bestimmen der Geschwindigkeit (*v*) des Fahrzeugs (1) herangezogen werden.

14. Verfahren nach einem der Ansprüche 7 bis 13, dadurch gekennzeichnet, daß durch das Dopplerradar der Abstand des Fahrzeugs zu Objekten auf der Fahrbahn ermittelt wird.

15. Vorrichtung zum Messen der Geschwindigkeit (*v*) eines Fahrzeugs (1) relativ zu einer Fahrbahnoberfläche (2), **dadurch gekennzeichnet**, daß die Vorrichtung erste Mittel (5) zum Messen der Geschwindigkeit (*v*) des Fahrzeugs (1) unmittelbar an der Fahrbahnoberfläche (2) unter Ausnutzung des Dopplereffekts aufweist.

16. Vorrichtung nach Anspruch 15, dadurch gekennzeichnet, daß das Fahrzeug (1) zweite Mittel zum Messen der Umdrehungsfrequenz eines Rades (4) des Fahrzeugs (1) und zum mittelbaren Bestimmen der Geschwindigkeit ($v_{mittelbar}$) des Fahrzeugs (1)aus der Umdrehungsfrequenz und dem Umfang des Rades (4) aufweist.

17. Vorrichtung nach Anspruch 15 oder 16, dadurch gekennzeichnet, daß die ersten Mittel (5) als ein Dopplerradar ausgebildet sind.

18. Vorrichtung nach Anspruch 17, dadurch gekennzeichnet, daß das Dopplerradar eine Sendeeinheit zum Aussenden von elektromagnetischen Wellen (7) auf die Fahrbahnoberfläche (2) und eine Empfangseinheit zum Empfangen der von der Fahrbahnoberfläche (2) reflektierten elektromagnetischen Wellen (8) aufweist.

19. Vorrichtung nach Anspruch 17 oder 18, dadurch gekennzeichnet, daß das Dopplerradar in dem in Fahrtrichtung (3) vorderen Bereich des Fahrzeugs (1) angeordnet ist.

20. Vorrichtung nach einem der Ansprüche 17 bis 19, dadurch gekennzeichnet, daß das Dopplerradar derart ausgerichtet ist, daß die elektromagnetischen Wellen (7) in Fahrtrichtung (3) vor dem Fahrzeug (1) in einem Neigungswinkel ($\alpha$) auf die Fahrbahnoberfläche (2) treffen.

21. Vorrichtung nach einem der Ansprüche 17 bis 20, dadurch gekennzeichnet, daß das Dopplerradar Mittel zum Bündeln der ausgesandten elektromagnetischen Wellen (7) aufweist.

**22.** Vorrichtung nach einem der Ansprüche 17 bis 21, dadurch gekennzeichnet, daß das Dopplerradar Mittel zum Filtern, Gewichten und/oder Mitteln der Frequenzen ($f_E$) der empfangenen elektromagnetischen Wellen (8) aufweist.

Fig. 1

Europäisches
Patentamt

**EUROPÄISCHER RECHERCHENBERICHT**

Nummer der Anmeldung

EP 99 11 9706

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | US 5 320 186 A (STROSSER RICHARD P ET AL) 14. Juni 1994 (1994-06-14) * Zusammenfassung * | 1,15 | G01S13/60 |
| A | * Spalte 2, Zeile 59 - Spalte 9, Zeile 43; Abbildungen 1-6 * | 2-4,7-9, 16-18, 20-22 | |
| X | US 4 527 160 A (ENDO AKIRA ET AL) 2. Juli 1985 (1985-07-02) * Zusammenfassung * | 1,15 | |
| A | * Spalte 2, Zeile 63 - Spalte 6, Zeile 49; Abbildungen 1-8 * | 7-13,17, 18,20-22 | |
| A | FR 2 584 490 A (VEGLIA) 9. Januar 1987 (1987-01-09) * Zusammenfassung * * Seite 4, Zeile 14 - Seite 10, Zeile 4; Abbildungen 1-3 * | 2,6,16 | |
| A | US 4 660 050 A (PHILLIPS OLIVER A) 21. April 1987 (1987-04-21) | 1,3,7-9, 15,17, 18,20,21 | **RECHERCHIERTE SACHGEBIETE (Int.Cl.7)** |
| | * Zusammenfassung * * Spalte 4, Zeile 19 - Spalte 12, Zeile 18; Abbildungen 1-5 * | | G01S |
| A | US 4 366 546 A (TACHIBANA AKIRA ET AL) 28. Dezember 1982 (1982-12-28) | 1,3, 7-13,15, 17-22 | |
| | * Zusammenfassung * * Spalte 3, Zeile 43 - Spalte 7, Zeile 34; Abbildungen 3-8 * | | |

Der vorliegende Recherchenbericht wurde für alle Patentansprüche erstellt

| Recherchenort | Abschlußdatum der Recherche | Prüfer |
|---|---|---|
| DEN HAAG | 31. März 2000 | Blondel, F |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

............................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**     EP 99 11 9706

In diesem Anhang sind die Mitglieder der Patentfamilien der im obengenannten europäischen Recherchenbericht angeführten
Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

31-03-2000

| Im Recherchenbericht angeführtes Patentdokument | Datum der Veröffentlichung | Mitglied(er) der Patentfamilie | Datum der Veröffentlichung |
|---|---|---|---|
| US 5320186 A | 14-06-1994 | DE 69204749 D | 19-10-1995 |
| | | DE 69204749 T | 04-04-1996 |
| | | DE 69212242 D | 22-08-1996 |
| | | DE 69212242 T | 19-12-1996 |
| | | DE 69212737 D | 19-09-1996 |
| | | DE 69212737 T | 23-01-1997 |
| | | DE 69230009 D | 21-10-1999 |
| | | DE 69230009 T | 20-01-2000 |
| | | EP 0517419 A | 09-12-1992 |
| | | EP 0523834 A | 20-01-1993 |
| | | EP 0517426 A | 09-12-1992 |
| | | EP 0694422 A | 31-01-1996 |
| US 4527160 A | 02-07-1985 | JP 57194371 A | 29-11-1982 |
| | | DE 3219819 A | 03-02-1983 |
| | | GB 2101831 A,B | 19-01-1983 |
| FR 2584490 A | 09-01-1987 | GB 2179159 A,B | 25-02-1987 |
| | | IT 1192815 B | 12-05-1988 |
| | | JP 62085867 A | 20-04-1987 |
| | | US 4796210 A | 03-01-1989 |
| US 4660050 A | 21-04-1987 | AU 2631384 A | 11-10-1984 |
| | | CA 1235781 A | 26-04-1988 |
| | | EP 0123870 A | 07-11-1984 |
| | | ES 531329 D | 16-06-1985 |
| | | ES 8506169 A | 16-10-1985 |
| | | JP 1795409 C | 28-10-1993 |
| | | JP 4071362 B | 13-11-1992 |
| | | JP 60041303 A | 05-03-1985 |
| | | US 4788553 A | 29-11-1988 |
| US 4366546 A | 28-12-1982 | JP 1501905 C | 28-06-1989 |
| | | JP 56039947 A | 15-04-1981 |
| | | JP 63049666 B | 05-10-1988 |
| | | JP 1501906 C | 28-06-1989 |
| | | JP 56039948 A | 15-04-1981 |
| | | JP 63049667 B | 05-10-1988 |
| | | DE 3033504 A | 16-04-1981 |
| | | GB 2059710 A,B | 23-04-1981 |

EPO FORM P0461

Für nähere Einzelheiten zu diesem Anhang : siehe Amtsblatt des Europäischen Patentamts, Nr.12/82